(19) Europäisches Patentamt
European Patent Office
Office européen des brevets

(11) Veröffentlichungsnummer: **0 214 578 B1**

(12) **EUROPÄISCHE PATENTSCHRIFT**

(45) Veröffentlichungstag der Patentschrift: **08.11.89**

(51) Int. Cl.⁴: **C07F 9/38**

(21) Anmeldenummer: **86112028.5**

(22) Anmeldetag: **30.08.86**

(54) **Verfahren zur Herstellung von N-Phosphonomethylglycin.**

(30) Priorität: **11.09.85 DE 3532344**

(43) Veröffentlichungstag der Anmeldung:
**18.03.87 Patentblatt 87/12**

(45) Bekanntmachung des Hinweises auf die Patenterteilung:
**08.11.89 Patentblatt 89/45**

(84) Benannte Vertragsstaaten:
**AT BE CH DE FR GB IT LI NL SE**

(56) Entgegenhaltungen:
**EP-A- 0 186 648**
**FR-A- 2 294 182**

(73) Patentinhaber: **HOECHST AKTIENGESELLSCHAFT, Postfach 80 03 20, D-6230 Frankfurt am Main 80(DE)**

(72) Erfinder: **Kleiner, Hans-Jerg, Dr.-Ing., Altkönigstrasse 11a, D-6242 Kronberg/Taunus(DE)**

EP 0 214 578 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein neues Verfahren zur Herstellung von N-Phosphonomethylglycin der Formel I

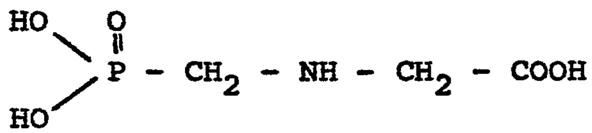
(I)

N-Phosphonomethylglycin ist ein Totalherbizid mit einem sehr breiten Spektrum, dessen Herstellung und Verwendung in der US-PS 3 799 758 beschrieben ist.

Die bisher bekannt gewordenen Herstellungsverfahren gründen sich in der Regel auf Umsetzungen unter Verwendung von Formaldehyd in Gegenwart von Chlorionen. Dabei ist die Bildung des cancerogenen Bischlormethylethers nicht zu vermeiden. Außerdem entsteht als Nebenprodukt vielfach das N-phosphonomethyl-N-carboxy methyl-glycin der Formel II

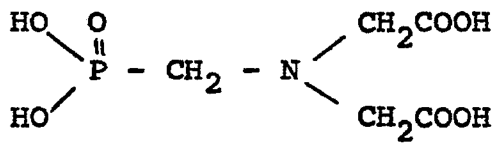
(II)

In der EP-OS 0 08I 459 wird vorgeschlagen, Aminomethanphosphonsäure mit Glyoxal in wäßrigem Medium in Gegenwart von Schwefeldioxid umzusetzen. Dabei entsteht I in Ausbeuten bis zu ca. 75 %, daneben fällt aber in beachtlichen Mengen II als Nebenprodukt an. Nachteilig bei diesem Verfahren ist weiterhin die Verwendung von Schwefeldioxid.

Schließlich ist aus der US-PS 4 094 928 bekannt, Aminomethanphosphonsäure(ester) mit Glyoxylsäure(ester) in organischem Medium umzusetzen. Dabei entsteht unter Wasserabspaltung die Schiff'sche Base der Formel

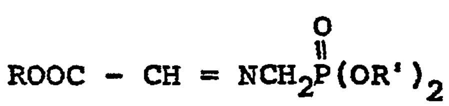
(III)

die durch Reduktion und gegebenenfalls Verseifung in I übergeführt werden kann. Dieses Verfahren ist nachteilig, weil es mehrere Reaktionsstufen erfordert und mit entsprechenden Ausbeuteverlusten verbunden ist.

Es wurde nun gefunden, daß man die Nachteile der bekannten Verfahren vermeidet und N-Phosphonomethylglycin in hoher Ausbeute und Reinheit erhält, wenn man Aminomethanphosphonsäure der Formel IV

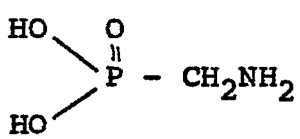
(IV)

oder Salze derselben mit starken Basen mit einer annähernd doppelt molaren Menge Glyoxylsäure in wäßrigem bzw. wasserhaltigem Medium umsetzt.

Unter den genannten Bedingungen findet keine Kondensation unter Wasserabspaltung und Bildung der Schiff'schen Base statt; vielmehr entsteht in einer noch ungeklärten Reaktionsfolge direkt die Verbindung I; als Nebenprodukt tritt $CO_2$ auf.

Die Umsetzung erfolgt beispielhaft, indem man Glyoxylsäure als konzentrierte (50%ige) wäßrige Lösung vorlegt und IV in fester Form portionsweise oder als wäßrige Lösung zugibt; doch kann auch in umgekehrter Reihenfolge gearbeitet werden. Man verwendet ein Molverhältnis von ca. I Teil IV und 2 Teilen Glyoxylsäure. Man arbeitet bei Temperaturen von I0 - I00°C, vorzugsweise 30 - I00°C.

Statt der freien Säure IV kann man auch deren Salze mit starken Basen verwenden, beispielsweise die Alkalisalze ($Na^+$, $K^+$), das Ammoniumsalz oder ein Aminsalz, z. B. das Ethylamin-, Triethylamin-, Isopropylamin- oder Ethanolaminsalz verwenden.

Die Reaktion kündigt sich durch eine lebhafte Gasentwicklung an, die mit steigender Temperatur zunimmt. Nach Beendigung derselben läßt man abkühlen und isoliert das ausgefallene Reaktionsprodukt. Zur besseren Abscheidung desselben kann es von Vorteil sein, dem Reaktionsansatz ein wassermischbares organisches Lösungsmittel wie Aceton, Acetonitril oder Methanol zuzusetzen. Das Verfahren kann auch kontinuierlich durchgeführt werden.

Das Reaktionsprodukt I entsteht in einer Ausbeute von mindestens 70 % und ist praktisch frei von Nebenprodukten.

Die anschließenden Beispiele dienen der näheren Erläuterung der vorliegenden Erfindung.

Beispiel 1

29,6 g (0,2 Mol) 50 %ige wäßrige Glyoxylsäurelösung wurden unter Rühren auf 40°C erwärmt. Dann wurden portionsweise bei 40 - 45°C 11,1 g (0,1 Mol) Aminomethanphosphonsäure zugegeben, wobei eine lebhafte Gasentwicklung einsetzt. Nach beendeter Zugabe wurde die Temperatur bis zu einer Innentemperatur von 85°C erhöht. Nach etwa 1 h war die Gasentwicklung beendet. Es wurde 15 min bei 85°C nachgerührt, etwas Wasser zugesetzt und gekühlt. Man erhielt nach 10 g N-Phosphono-methylglycin, Fp.: 321-323°C [Zers.]. Durch Einengen der Mutterlauge und Digerieren des ausfallenden Kristallbreis mit Methanol/Wasser erhielt man weitere 2,5 g. Die Gesamtausbeute betrug somit 74 % d.Th.

Beispiel 2

30 g (0,203 Mol) 50 %ige wäßrige Glyoxylsäurelösung wurden unter Rühren auf 40°C erwärmt und eine 40 - 50°C warme Lösung von 11,1 g (0,1 Mol) Aminomethanphosphonsäure in 60 ml Wasser tropfenweise zugegeben, wobei Gasentwicklung einsetzte. Die Temperatur wurde während des Eintropfens auf 60°C gesteigert. Nach Beendigung des Eintropfens wurde 1 h nachgerührt, wobei die Temperatur nach und nach auf 100°C gesteigert wurde. Nach dem Aufhören der Gasentwicklung wurde 30 min bei 100°C nachgerührt und dann gekühlt. Dabei kristallisierten 10,5 g N-Phosphono-methylglycin aus. Aus der eingeengten Mutterlauge erhielt man weitere 2,5 g. Die Gesamtausbeute betrug somit 77 % d.Th.

Beispiel 3

29,6 g (0,2 Mol) 50%ige wäßrige Glyoxylsäurelösung wurden auf 60°C erwärmt und 13,3 g (0,1 Mol) Na-Salz der Aminomethanphosphonsäure in 27 ml Wasser aus einem beheizbaren Tropftrichter innerhalb 2 Std. unter Rühren bei 60°C tropfenweise zugegeben. Dann wurde die Temperatur langsam auf 100°C erhöht und 10 Min. nachgerührt, bis keine Gasentwicklung mehr erfolgte. Nach dem Abkühlen wurde das Wasser im Vakuum abdestilliert, der verbleibende Rückstand mit 30 g konz. Salzsäure digeriert und das gebildete Natriumchlorid abgesaugt. Das Filtrat wurde im Vakuum bei ca. 50°C eingeengt. Der verbleibende Rückstand wurde über KOH getrocknet, mit wäßrigem Methanol (ca. 50%ig) digeriert, geschüttelt und abgesaugt, anschließend mit Methanol gewaschen und getrocknet. Man erhielt 12 g N-Phosphonmethylglycidin, Ausbeute 71% d. Th..

**Patentansprüche**

1. Verfahren zur Herstellung von N-Phosphonomethylglycin der Formel

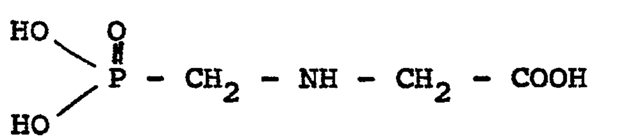

(I)

dadurch gekennzeichnet, daß man Aminomethanphosphonsäure der Formel

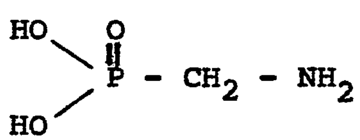

(II)

oder Salze derselben mit starken Basen mit Glyoxylsäure im Molverhältnis von ca. 1:2 im wäßrigen oder wäßrig-organischen Medium umsetzt.

2. Verfahren nach Anspruch 1, dadurch gekennzeichnet, daß man die Umsetzung bei Temperaturen von 10 - 100°C, vorzugsweise 30 bis 100°C durchführt.

3. Verfahren nach Anspruch 1, dadurch gekennzeichnet, daß man ein wassermischbares organisches Lösungsmittel wie Aceton, Acetonitril oder Methanol zusetzt.

**Revendications**

1. Procédé pour préparer la N-phosphonométhylglycine, corps qui répond à la formule I:

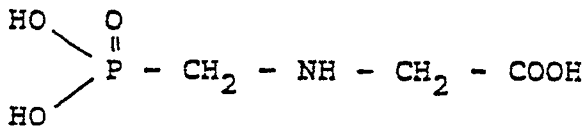

(I)

procédé caractérisé en ce qu'on fait réagir l'acide aminométhane-phosphonique qui répond à la formule II:

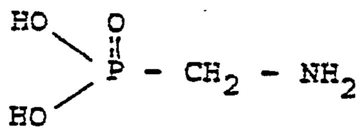

(II)

ou des sels dérivant de cet acide et de bases fortes, avec l'acide glyoxylique dans un rapport molaire d'environ 1:2, en milieu aqueux ou en milieu aqueux-organique.

2. Procédé selon la revendication 1 caractérisé en ce qu'on effectue la réaction à des températures de 10 à 100°C, de préférence de 30 à 100°C.

3. Procédé selon la revendication 1 caractérisé en ce qu'on ajoute un solvant organique miscible à l'eau, tel que l'acétone, l'acétonitrile ou le méthanol.

**Claims**

1. A process for the preparation of N-phosphonomethylglycine of the formula

(I)

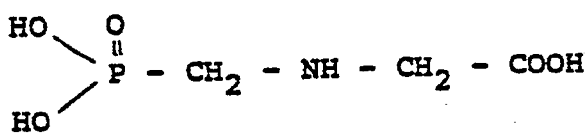

wherein aminomethanephosphonic acid of the formula

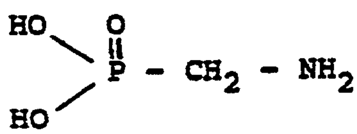

(II)

or salts thereof with strong bases, are reacted with glyoxylic acid in the molar ratio of about 1:2 in aqueous or aqueous-organic medium.

2. The process as claimed in claim 1, wherein the reaction is carried out at temperatures of 10–100°C, preferably 30 to 100°C.

3. The process as claimed in claim 1, wherein a watermiscible organic solvent such as acetone, acetonitril or methanol is added.